# EUROPEAN PATENT APPLICATION

(11) **EP 2 250 992 A1**
(43) Date of publication of application: **17.11.2010**
(21) Application number: 09160107.0
(22) Date of filing: 13.05.2009
(51) Int. Cl.: A61J 1/14, B65D 39/04, B29C 43/20

(54) **Rubber plug partially coated with PET film and preparation method thereof**

(71) Applicant: Hubei Huaqiang High-Tech Co., Ltd., Hubei 443003 (CN)
(72) Inventor: Duan, Chaoyang, 443003 Hubei (CN); He, Huashan, 443003 Hubei (CN); Wang, Jibai, 443003 Hubei (CN); Ye, Xueqing, 443003 Hubei (CN); Mao, Shengqiong, 443003 Hubei (CN); Bai, Hanying, 443003 Hubei (CN); Wang, Huirong, 443003 Hubei (CN)
(74) Representative: BRP Renaud & Partner

(57) **Abstract**

The present invention discloses a rubber plug partially coated with PET film, which includes neck part (22) and top part (21), wherein the neck part is arranged on the top part of the plug, and the surface of neck part is coated with fluorinated PET film (23). The preparation method is: (1) preparing PET film, and subjecting it to fluorination treatment, wherein the fluorination treatment comprises placing PET film in fluorination equipment, evacuating the system to 0.1-0.3kPa, and introducing fluorine gas mixture into the fluorination equipment for carrying out fluorination reaction, and the fluorination conditions are as below: temperature 20-80°C, time 0.5-4h, volume percentage of fluorine in the fluorine gas mixture 1-25%, and pressure 5-200kPa; (2) preparing elastomer rubber sheet (3), flatly adhering the fluorinated PET film to the elastomer rubber sheet, then placing the sheet in vulcanizer for vulcanization, and forming to obtain a rubber plug; (3) subjecting the PET film to annular cutting, heating and cooling the rubber plug, and removing the PET film on the top part to pbtain the rubber plug partially coated with PET film which can prevent capillary phenomena.

## Description

### Field of the Invention

The present invention relates to a rubber plug, and particularly relates to a rubber plug with surface coated with PET film and its preparation method.

### Background of the Invention

The rubber plugs for medical containers are different from the general rubber plugs, and must comply with stipulated standard requirements. In order to satisfy the ever-increasing demand for reliability of medical containers, various kinds of rubber plugs are put into use, wherein the rubber plug with surface being coated with PET film and capable of effectively improving and controlling the compatibility of rubber plug and medicines is recommended and adopted as the use of rubber plug material will not cause contamination of the medicine in the container, and the rubber plug can prevent its rubber compound components from dissolving into the medicine because of its extreme inertness and excellent chemical stability.

But the adhesion between PET film and rubber is poor. If the surface of rubber plug is completely coated with the polymer film, capillary phenomena will occur at joint surface of bottle mouth and top part of the plug, which could lead to leakage or seepage of medicinal solution.

### Summary of the Invention

In order to solve the problems present in prior arts, i.e. leakage or seepage of medicinal solution caused by capillary phenomena at the joint surface of bottle mouth and top part of the rubber plug, the present invention proposes a rubber plug partially coated with PET film and its preparation method, which can both prevent rubber compound components from dissolving into medicinal, and inhibit occurrence of capillary phenomena at the joint surface of the bottle mouth and the top part of the rubber plug.

The technical scheme of the present invention is: a rubber plug partially coated with PET film includes neck part and top part, wherein the neck part is arranged on the top part, and the surface of neck part is coated with fluorinated PET film.

A preparation method of the aforementioned rubber plug partially coated with PET film includes:

Step One, fluorination: place PET film in fluorination equipment, evacuate the system to 0.1-0.3kPa, and introduce fluorine gas mixture into the fluorination equipment for carrying out fluorination reaction. The fluorination conditions are as below: temperature 20-80°C, time 0.5-4h, the volume percentage of fluorine in the fluorine gas mixture composed of fluorine and nitrogen is 1-25%, pressure 5-200kPa. After reaction, fluorinated PET film is prepared.

Step Two, film adhesion and thermal bonding: prepare a elastomer rubber sheet, flatly adhere the fluorinated PET film of step one on the elastomer rubber sheet, vulcanize in vulcanizer at vulcanization temperature of 120-220°C, under pressure of 5-18MPa for 200-300s, wherein the elastomer rubber sheet is butyl rubber or isoprene rubber. During film coating, the fluorinated film is adhered with the elastomer rubber sheet, and then the fluorinated film and elastomer rubber sheet is vulcanized for integration; undesirable film is removed via cutting technique to form the rubber plug partially coated with film, i.e. form the rubber plug in one step and then partially remove undesirable PET film; the detailed procedure comprises: annularly cutting the PET film of the rubber plug at root part of the rubber plug neck part, i.e. joint part of the rubber plug neck part and top part, heating the part of rubber plug where PET film needs to be removed to 20-200°C, then cooling to -50 ∼ -20°C, and removing the PET film on the rubber plug top part via mechanical, laser or infrared cutting technique and finally obtaining the rubber plug partially coated with PET film.

Another method comprises adhering fluorinated PET film to the elastomer rubber sheet to be coated, the elastomer rubber sheet and the film is vulcanized for integration and then integrated with the uncoated rubber through cross linking reaction, i.e. first form rubber plug neck part blank through press, and then the rubber plug neck part blank coated with PET film and the rubber plug top part is vulcanized and crosslinked to obtain rubber plug partially coated with PET film. The detailed procedure comprises: preparing elastomer rubber sheet according to the amount of production of rubber plug top part, and placing the rubber sheet together with press formed rubber plug neck part blank coated with PET film in the mould of vulcanizer for vulcanization and finally obtaining rubber plug partially coated with PET film; wherein the vulcanization conditions are as below: temperature 120-220°C, pressure 5-18MPa, and time 200-300s.

### Benefits of the Present Invention:

1. By coating fluorinated PET film on the rubber plug neck part, the invention can make PET effectively integrated with part of rubber plug, which both takes advantage of extreme inertness and excellent chemical stability of PET film, and prevents medicinal solution seepage or leakage caused by capillary phenomena at joint surface of bottle mouth and the rubber plug top part.
2. The method of present invention has the advantage of simple operation, good feasibility, good controllability of production process, high production efficiency, and reliable product quality. After prepared rubber plug has been cooked in 121°C water for 30min and then dried at 121°C, its PET film won't detach from the elasmoter substrate regardless of season of the year, so the product has extremely reliable quality.

### Brief Description of the Drawings

The detailed structure of the present invention is explained by following embodiments and drawings.
Fig. 1 is sectional view of the rubber plug partially coated with PET film.
Fig. 2 is schematic view of one step forming process of the rubber plug top part and neck part.

### Embodiment

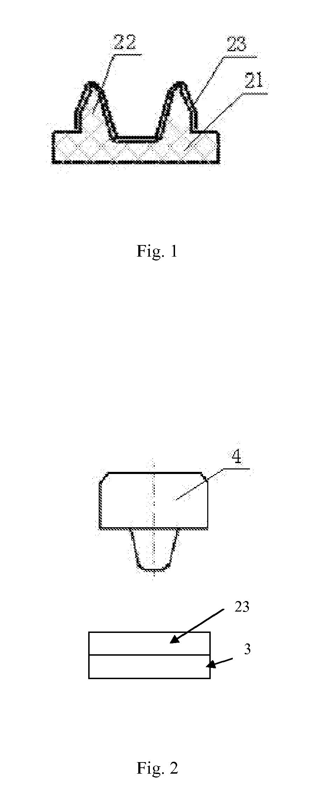

The present invention will be explained in detail with reference to Fig. 1 and 2.

### Embodiment 1

A method for producing above rubber plug partially coated with PET film:
Step 1) fluorination: prepare PET film, and subject the PET film to fluorination treatment, wherein the fluorination treatment method comprises:
   Placing PET film in fluorination equipment, evacuating the system to 0.1-0.3kPa (0.1, 0.2, or 0.3 kPa in the present embodiment);
   Introducing fluorine gas mixture into fluorination equipment for carrying out fluorination reaction, wherein the fluorination conditions is: temperature 20-80°C;
   time 0.5-4h; the volume percentage of fluorine in the fluorine gas mixture is 1-25%; pressure 5-200kPa; in the present embodiment, the fluorination conditions are as below: temperature 20, 50, or 80°C; time 0.5, 1.8, 2.6, 3.3, or 4h; the volume percentage of fluorine in fluorine gas mixture is 1, 8, 19, or 25%, and others is high purity nitrogen; pressure 5, 57, 105, 169, or 200kPa;
   Taking out PET film when reaction is finished;
Step 2) film adhesion and thermal bonding: as shown in Fig. 2, prepare elastomer rubber sheet 3 which can be made of butyl rubber or isoprene rubber, flatly adhere the fluorinated PET film on the elastomer rubber sheet, place the elamtomer rubber sheet 3 with flatly adhered PET film 23 in vulcanizer for vulcanization and the rubber plug is obtained through pressure form in mould core 4; wherein, the vulcanization is carried out at following conditions: temperature 120-220°C, pressure 5-18MPa, and time 200-300s; said elastomer rubber sheet can be processed by open mill, three-roll calender or four-roll calender, the roll temperature is controlled at 40-180°C, such as 40, 180, or 75°C; the vulcanizer can be vacuum vulcanizer or molding vulcanizer; the vulcanization temperature can be 120, 145, 190, 209, or 220°C; the pressure can be 5, 8, 13, or 18MPa; the vulcanization time can be determined according to vulcanization temperature and pressure and rubber material properties, the vulcanization time determination principle is: the vulcanization time is 40-80s longer than TC₉₀ of vulcanization curve at certain vulcanization temperature of the rubber material, the higher the pressure, the flatter the curve, the lower the increment, and vice vesa. Furthermore, the higher the vulcanization temperature, the shorter the vulcanization time, and vice vesa. In the present embodiment, the vulcanization time in thermal bonding process is 200-300s, for example 200, 219, 267, 286, or 300s.
Step 3) partial film cutting and removal: annularly cut PET film at root part of the rubber plug neck part, i.e. joint part of the rubber plug neck part and top part, then heat the part of the rubber plug where PET film is to be removed to 20-200°C, then cool the part to -50 ∼ -20°C to weaken bonding force between the to-be-removed PET film on the rubber plug top part and the elastomer rubber sheet, finally remove the to-be-removed PET film on the rubber plug top part, and remove rubber burrs to obtain rubber plug partially coated with PET film, wherein, the heating temperature can be 60, 100, 120, or 200°C, and the cooling temperature can be -25, -35, or -50°C. Said annular cutting of PET film can be achieved by mechanical method or other methods, such as laser or infrared method, to annularly cut PET film 23 at joint part of the rubber plug neck part 22 and top part 21, the cutting process only cuts the PET film and will not damage elastomer substrate. The film removal method in the present invention utilizes thermal expansion coefficient difference of PET film and elastomer, heats or cools the rubber plug to weaken the bonding force between PET film and elastomer during cooling and heating process, then removes undesirable PET film at top part to obtain the rubber plug partially coated with fluorinated PET film 23 at surface of the neck part 22.

### Embodiment 2

Another production method of above rubber plug partially coated with PET film:
Step 1) fluorination:
   prepare PET film and subject it to fluorination treatment, wherein the fluorination treatment method comprises:
   Placing PET film in fluorination equipment, and evacuating the system to 0.1-0.3kPa;
   Introducing fluorine gas mixture into fluorination equipment for carrying out fluorination reaction at the conditions as below: temperature 20-80°C, time 0.5-4h, volume percentage of fluorine in fluorine gas mixture 1-25%; pressure 5-200kPa;
   Taking out PET film when reaction is finished;
Step 2) preparations of rubber plug neck part:
   Prepare an elastomer rubber sheet, and flatly adhere the fluorinated PET film on the elastomer rubber sheet, the elamtomer rubber sheet with flatly adhered PET film is placed in vulcanizer for vulcanization and subjected to pressure forming to obtain rubber plug neck part blank; trim off burrs of the blank by deflasher to obtain rubber plug neck part; wherein, the vulcanization conditions are: temperature 120-220°C, pressure 5-18MPa, and time 200-300s;
Step 3) vulcanization and thermal bonding of rubber plug neck part and top part:
   prepare elastomer rubber sheet according to the amount of rubber for producing rubber plug top part, and place the rubber sheet together with the rubber plug neck part blank obtained in step 2) in the mould of vulcanizer for vulcanization to obtain rubber plug partially coated with PET film; wherein the vulcanization conditions are as below: temperature 120-220°C, pressure 5-18MPa, time 200-300s, and the time of thermal bonding of the neck part and the vulcanization time of vulcanization and thermal bonding of the neck part and the top part is 200-300s.

### Embodiment 3

The present embodiment is characterized by subjecting PET film to surface fluorination treatment, then applying it to rubber plug partially coated with PET film. The fluorinated film is adhered to rubber and then integrated with rubber under high temperature and pressure through vulcanization. Remove undesirable film by cutting techniques, such as mechanical, infrared, or laser cutting techniques, to form plug partially coated with film or similar bottle plug products. The process is as below:
1) Fluorination:
   (1) Place PET film 1 in fluorination equipment, evacuate the system to 0.1-0.3kPa;
   (2) Introduce fluorine gas mixture into fluorination equipment for carrying out fluorination, wherein, the fluorination conditions is: temperature 20-80°C; time 0.5-4h; volume percentage of fluorine in fluorine gas mixture 1-25%; pressure 5-200kPa;
   (3) Taking out PET film when reaction is finished;
2) Film adhesion:
   Flatly adhere fluorinated PET film with elastomer rubber sheet, wherein the rubber sheet can be processed by open mill, three-roll calender, or four-roll calender, and rolling temperature is controlled at 40-180°C;
3) Thermal bonding:
   Place the rubber sheet flatly adhered with film in vulcanizer for vulcanization, wherein the vulcanizer can be vacuum vulcanizer, common molding vulcanizer, or injection vulcanizer, the vulcanization temperature: 120-220°C, pressure: 5-18MPa; the vulcanization time can be determined according to vulcanization temperature, pressure and rubber material properties, the vulcanization time in the present embodiment is 200-300s, and the obtained vulcanized product is rubber plug with one surface completely coated with PET film;
4) Film cutting:
   Subject PET film of rubber plug neck part to annular cutting by mechanical cutting, infrared cutting or laser cutting, wherein the cutting processes only cut the polymer film and won't damage elastomer substrate;
5) Film removal:
   Heat or cool the product cut in fixed position, control temperature at -50-200°C, weaken the bonding between the PET film and the elastomer during heating or cooling process by utilizing thermal expansion coefficient difference between PET film and elastomer, remove undesirable PET film at the top part by mechanical force, and trim off rubber burr to obtain the rubber plug partially coated with PET film.

### Embodiment 4

The present embodiment is characterized by adhering fluorinated PET film with to-be-coated rubber, i.e. neck part, vulcanizing the rubber and the film into a whole under high temperature and high pressure, subjecting the coated neck part and the uncoated part (top part) to cross linking reaction under high pressure to form a whole. The process is as below:
1) Fluorination:
   (1) Placie PET film in fluorination equipment, evacuate the system to 0.1-0.3kPa;
   (2) Introduce fluorine gas mixture into fluorination equipment for carrying out fluorination; fluorination conditions are as below: temperature 20-80°C, time 0.5-4h, volume percentage of fluorine in fluorine gas mixture 1-25%, pressure 5-200kPa,;
2) Film adhesion:
   Flatly adhere fluorinated PET film 23 with elastomer rubber sheet 3, wherein the rubber sheet can be processed by open mill, three-roll calender, or four-roll calender, and roll temperature is controlled at 40-180°C;
3) Thermal bonding of neck part:
   Place the rubber sheet flatly adhered with film in vulcanizer for vulcanization, wherein the vulcanization mould just produces rubber plug neck part coated with film, the vulcanizer can be vacuum vulcanizer, common molding vulcanizer, or injection vulcanizer, the vulcanization temperature is 120-220°C and pressure is 5-18MPa, the vulcanization time can be determined according to vulcanization temperature, pressure and rubber material properties, the vulcanization time in the present embodiment is 200-300s, and the vulcanized product is rubber plug with one surface completely coated with PET film;
4) Punching of neck part:
   Punch the rubber plug neck part by deflasher;
5) Vulcanization and thermal bonding of neck part and top part:
   Load rubber plug neck part into mould via loading device, then at the same time place elastomer rubber sheet in the mould for vulcanization; the vulcanization temperature is 120-220°C and pressure is 5-18MPa, the vulcanization time can be determined according to vulcanization temperature, pressure and rubber material properties, the vulcanization time in the present embodiment is 200-300s, and the vulcanized product is rubber plug with partially coated with PET film.

### Embodiment 5

During application process of the rubber plug, the harshest stage is sterilization and disinfection process before use, the sterilization and disinfection conditions is: cooking in 121°C water for 30min, and then drying at 121°C. The rubber plug coated with PET film is subjected to the processing according to the aforementioned conditions at different months, and the result is shown in Table 1.

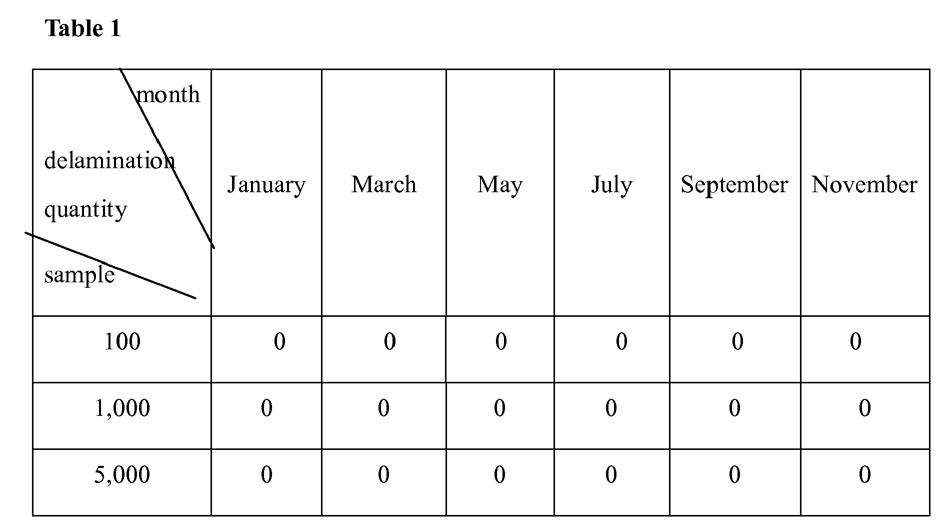

For the rubber plug produced by the process in the present invention, its PET film will not detach from the elatomer substrate regardless of season of the year, so it has extremely reliable quality.

## Claims

1. A rubber plug partially coated with PET film, wherein, it includes neck part (22) and top part (21), the neck part (22) is arranged on the top part (21) of the plug, and the neck part is coated with fluorinated PET film (23) on its surface.

2. A preparation method of the rubber plug partially coated with PET film as claimed in claim 1, wherein:
Step One, fluorination: place PET film in fluorination equipment, evacuate the system to 0.1-0.3kPa, and introduce fluorine gas mixture into the fluorination equipment for carrying out fluorination reaction to obtain fluorinated PET film after reaction is finished, wherein the fluorination conditions are as below: temperature 20-80°C, time 0.5-4h, volume percentage of fluorine in the fluorine gas mixture 1-25%, and pressure 5-200kPa;
Step Two, film adhesion and thermal bonding: flatly adhere the fluorinated PET film in the step one to the elastomer rubber sheet, then place the elastomer rubber sheet in vulcanizer for vulcanization at vulcanization temperature of 120-220°C and under pressure of 5-18MPa for 200-300s, one-step form to obtain a rubber plug, and then partially cut off PET film to obtain the rubber plug partially coated with film; or press form rubber plug neck part blank first, subject the rubber plug neck part coated with PET film and rubber plug top part to vulcanization and cross linking to obtain the rubber plug partially coated with PET film.

3. The preparation method of the rubber plug partially coated with PET film as claimed in claim 2, wherein, the detailed process for forming rubber plug in one step and then partially cutting off PET film in step two is: subjecting the PET film on the one-step formed rubber plug to annular cutting at its root part, i.e. joint part of the rubber plug neck part and top part, heating part of the rubber plug where the PET film needs to be removed to 20-200°C, then cooling to -50 ∼ -20°C, and removing the PET film on the rubber plug top part via mechanical, laser or infrared cutting technique to obtain the rubber plug partially coated with PET film.

4. The preparation method of the rubber plug partially coated with PET film as claimed in claim 2, wherein, the detailed process of press forming rubber plug neck part blank first and subjecting the rubber plug neck part blank coated with film and the rubber plug top part to vulcanization and cross linking in step 2 comprises: preparing elastomer rubber sheet according to the amount of rubber for producing rubber plug top part, and placing the rubber sheet together with press formed rubber plug neck part blank coated with PET film in the mould of vulcanizer for vulcanization to obtain rubber plug partially coated with PET film; wherein the vulcanization conditions are as below: temperature 120-220°C, pressure 5-18MPa, and time 200-300s.

5. The preparation method of the rubber plug partially coated with PET film as claimed in claim 2, wherein, the fluorine gas mixture is composed of fluorine and nitrogen.

6. The preparation method of the rubber plug partially coated with PET film as claimed in claim 2, wherein, the elastomer rubber sheet is composed of butyl rubber or isoprene rubber.
